Europäisches Patentamt

European Patent Office

Office européen des brevets

(11) Numéro de publication: **0 000 111**
**B1**

(12) **FASCICULE DE BREVET EUROPEEN**

(45) Date de publication du fascicule de brevet: **13.05.81**

(21) Numéro de dépôt: **78400014.3**

(22) Date de dépôt: **07.06.78**

(51) Int. Cl.³: **B 29 J 1/02,** F 26 B 13/10, F 26 B 3/06

(54) Appareil pour le traitement thermique d'un matelas de fibres portant un liant thermoducissable.

(30) Priorité: **09.06.77 FR 7717642**

(43) Date de publication de la demande: **20.12.78 Bulletin 78/1**

(45) Mention de la délivrance du brevet: **13.05.81 Bulletin 81/19**

(84) Etats Contractants Désignés: **BE CH DE FR GB LU NL SE**

(56) Documents cités:
FR - A - 1 054 103
US - A - 2 997 096
US - A - 3 084 448
US - A - 3 096 161

(73) Titulaire: **SAINT-GOBAIN INDUSTRIES 62, Bd Victor Hugo F-92209 Neuilly sur Seine (FR)**

(72) Inventeur: **Battigelli,Jean A. 17, rue E.Vaillant F-60290 Rantigny (FR)**
Inventeur: **Bouquet, François 30, rue E. Vaillant · F-60290 Rantigny (FR)**

(74) Mandataire: **Eudes, Marcel et al, SAINT-GOBAIN RECHERCHE 39 Quai Lucien Lefranc F-93304 Aubervilliers CEDEX (FR)**

Courier Press, Leamington Spa, England.

## Appareil pour le traitement thermique d'un matelas de fibres portant un liant thermodurcissable

Pour produire des matelas de fibres isolantes et spécialement des matelas faits de fibres de verre ou de fibres minérales analogues, il est habituel de commencer la fabrication du matelas en déposant les fibres sur un transporteur mobile perforé, d'habitude à l'aide de caissons d'aspiration agencés sous le brin du transporteur sur lequel les fibres sont déposées. Il est habituel aussi de déposer un liant pour les fibres sur celles-ci, soit avant, soit pendant la constitution du matelas sur le transporteur, ce liant ayant des propriétés d'adhésivité et comprenant d'habitude une matière durcissable ou réticulable à chaud, comme une résine thermodurcissable, par exemple une résine phénol/formaldéhyde pulvérisée sur les fibres à l'état de solution ou suspension dans un liquide volatil tel que l'eau.

La couche ou nappe de fibres relativement lâches sur le transporteur collecteur est d'habitude ensuite transférée à un appareil appelé communément "étuve de traitement thermique du matelas", dans lequel celui-ci est transporté par des transporteurs perforés supplémentaires, qui comprennent fréquemment deux transporteurs sans fin présentant des brins adjacents qui sont en regard et espacés et servent à déterminer l'épaisseur du matelas qui se forme. Un tel matelas peut être plus ou moins dense en fonction du degré de la compression exercée par les deux transporteurs dans l'étuve.

Pendant son passage dans l'étuve, le matelas est soumis à un traitement thermique qui provoque le durcissement du liant pour les fibres et ainsi la stabilisation du matelas à l'épaisseur désirée.

Parmi les étuves connues, celles décrites dans le brevet américain 2 997 096 produisent le durcissement partiel du liant dans le matelas maintenu dans sa forme définitive, puis le durcissement complet du liant, le matelas étant libéré des moyens de mise en forme.

D'autres étuves, telles que celles décrites dans le brevet américain 3 096 161, comprennent, outre certains des éléments décrits dans le brevet américain 2 997 096, des plaques chauffées diélectriquement, dont l'action se combine à celle des courants d'air chaud pour évacuer du matelas maintenu en forme l'excès d'humidité du liant, préalablement au durcissement complet de celui-ci.

Ces différentes techniques ne permettent pas de modifier rapidement la température au coeur du matelas pour porter celle-ci, au moment voulu, à tout niveau souhaitable et, en particulier, la mettre rapidement en équilibre avec la température de traitement assignée en tel endroit de l'étuve à un stade donné de l'opération, ainsi que permet de la faire le dispositif selon la présente invention.

L'invention consiste, sur une faible partie de la distance totale du traitement du matelas dans l'étuve, à ajouter à la circulation forcée générale des gaz d'une face à l'autre du produit, ou circulation primaire, une seconde circulation forcée, sous pression relativement élevée donc à débit spécifique plus élevé, ou circulation secondaire, en aspirant localement les gaz sur une face du matelas à l'intérieur de l'enceinte pour les réinjecter sur sa face opposée, ceci de préférence en regard de la zone d'aspiration. Ce recyclage à débit élevé s'effectue dans une région bien déterminée, par exemple celle où les réactions du durcissement du liant sont déjà suffisamment avancées pour que le matelas ait acquis une tenue superficielle suffisante, ceci dans le but d'accélérer les échanges thermiques et en particulier de modifier la température au sein du produit pour accélérer le traitement.

L'agencement conforme à l'invention est adaptable au traitement de matelas et nappes de matières fibreuses d'une grande diversité, mais il est spécialement avantageux pour le durcissement du liant de matelas relativement denses, parce que les conditions de pression et de température entretenues dans le système de chauffage secondaire conforme à l'invention favorisent une pénétration rapide de la chaleur à l'intérieur d'un produit fibreux, même relativement dense et épais, et du fait que l'effet de l'air secondaire sous haute pression est exercé après que les couches superficielles du matelas ont été stabilisées, la pénétration rapide est assurée sans rupture des fibres.

Dans une installation typique dans laquelle le système de traitement thermique primaire comprend des paires de collecteurs ou caissons de circulation d'air chaud agencées en succession le long du trajet dans l'étuve, il est proposé, suivant l'invention, d'introduire comme système de traitement thermique secondaire au moins une paire supplémentaire de collecteurs de circulation d'air chaud occupant une région localisée et relativement petite à l'interieur de la zone ou région de l'une des paires de caissons du système primaire. Dans cette installation, l'air chauffé du système secondaire fonctionnant dans la région localisée se trouve sous une pression supérieure à celle de l'air utilisé dans le système primaire. Utilisé suivant ce principe, le système de circulation d'air primaire sert non seulement à apporter la chaleur nécessaire pour le durcissement du liant, mais aussi de moyen pour empêcher les fuites ou dissipations à l'atmosphère de l'air qui s'échappe du système secondaire fonctionnant sous une pression plus élevée.

Grâce à l'utilisation tant du système primaire que du système secondaire et à l'entretien d'une pression plus élevée dans le système secondaire, la pénétration rapide de la chaleur à l'intérieur du matelas en cours de traitement thermique dans la région localisée des collecteurs secondaires est fort efficace pour atteindre rapidement la température de durcissement du liant au coeur du matelas et l'un des buts de l'invention est d'atteindre rapidement une température de durcissement du liant qui est suffisamment élevée pour amorcer la réaction exothermique de la résine liante. L'établissement de cette température exothermique provoque la poursuite du durcissement du liant, même si les zones ultérieures de l'étuve ne sont pas maintenues à cette même température élevée. Par conséquent, pour l'ensemble du traitement thermique, l'utilisation du système secondaire à haute pression dans les régions localisées de traitement thermique en aval conduit à une économie d'ensemble sur la quantité totale de combustible dépensée pour effectuer le traitement thermique.

L'invention a en outre pour but de procurer de nouveaux agencements pour introduire les collecteurs à haute pression du système secondaire dans les régions localisées des caissons de circulation du système primaire, ces agencements permettant de réduire jusqu'au minimum le court-circuitage et les fuites et permettant aussi automatiquement la déformation de certains des éléments d'étanchéité sans rupture de ceux-ci dans le cas d'une accumulation de résine ou d'autres dépôts sur les transporteurs faisant défiler le matelas dans l'étuve.

La façon dont on atteint ces différents buts et d'autres de l'invention et dont on bénéficie des avantages qu'elle offre ressort de la description plus détaillée donnée ci-après avec référence aux dessins annexés, dans lesquels:

Fig. 1a et 1b, considérées ensemble, sont une vue en coupe longitudinale dans une étuve de traitement thermique de matelas conforme à l'invention, comprenant une succession de six paires de caissons de circulation d'air chaud constituant le système primaire de traitement thermique et, en outre, un système secondaire constitué de deux paires de collecteurs à haute pression localisés, une paire étant agencée dans chacun des deux derniers caissons du système de circulation primaire ou à basse pression;

Fig. 1c est une vue partielle, semblable à celle de la Fig. 1b, mais illustrant une autre forme de réalisation dans laquelle deux paires de caissons de circulation secondaire ou à haute pression sont logées dans l'une des paires de caissons de circulation à basse pression;

Fig. 2 est une vue en coupe transversale et à plus grande échelle dans une des paires de caissons de circulation d'air chaud primaire, comme indiqué par la ligne de coupe 2—2 de la Fig. 1a;

Fig. 3 est une vue en coupe longitudinale et partielle, à l'échelle de la Fig. 2 montrant une des paires de caissons de circulation primaire ou à basse pression à l'intérieur de laquelle est logée une paire de collecteurs secondaires ou à haute pression;

Fig. 4, à la même échelle que les Fig. 2 et 3, est une vue en coupe transversale dans une paire de caissons de circulation secondaire ou à haute pression suivant la ligne de coupe 4—4 de la figure 1b, et

Fig. 5 est une vue partielle, à plus petite échelle que la Fig. 4, illustrant une variante du système de circulation d'air à haute pression.

Dans les dessins, le chiffre de référence 6 indique l'enceinte générale de l'étuve de traitement thermique du matelas dans laquelle sont agencés le système de transporteurs et les système de circulation d'air chaud.

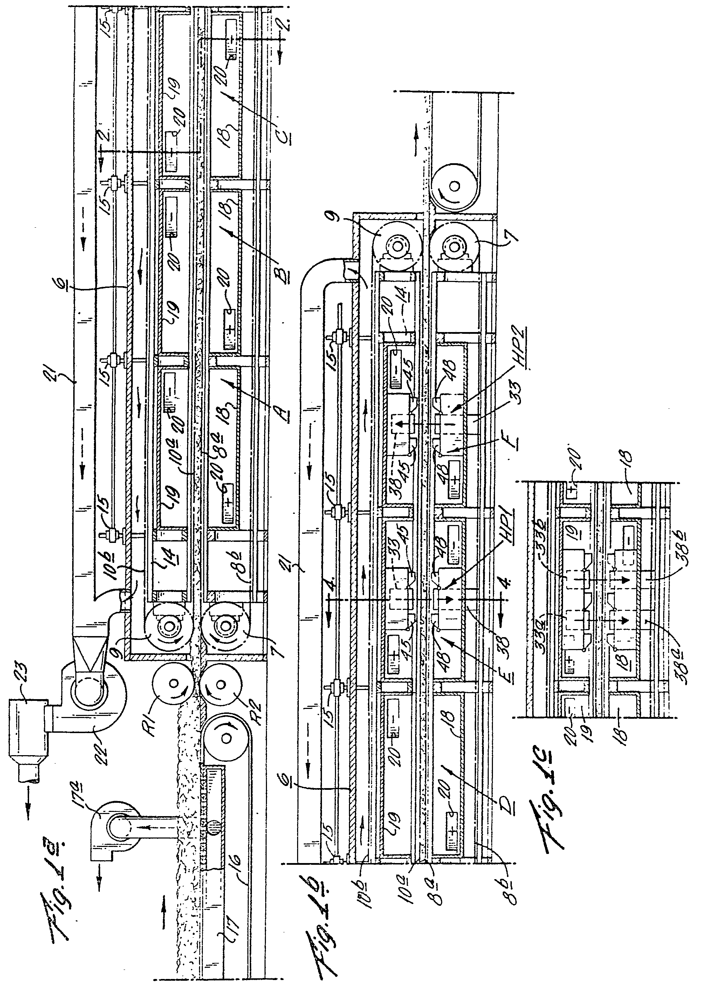

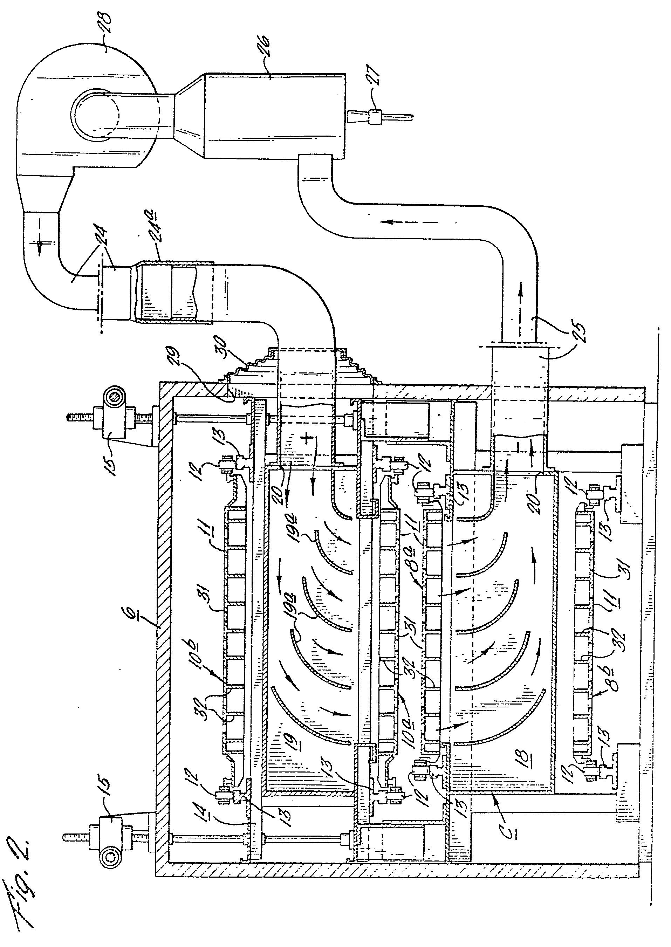

Comme le montrent les Fig. 1a et 1b, des organes de support rotatifs ou barbotins 7—7 sont agencés dans la partie basse de l'étuve pour le montage d'un transporteur sans fin inférieur dont le brin supérieur et le brin inférieur ne sont indiqués aux Fig. 1a et 1b que par des lignes en trait mixte, ces brins du transporteur apparaissant avec plus de détails en 8a et 8b aux Fig. 2, 3 et 4. Comme il ressort des Fig. 1a et 1b, des organes de support rotatifs ou barbotins 9—9 sont également prévus pour le transporteur supérieur qui n'est indiqué aux Fig. 1a et 1b que par des lignes en trait mixte, mais dont le brin inférieur et le brin supérieur apparaissent avec plus de détails en 10a et 10b aux Fig. 2, 3 et 4. Chacun des transporteurs est constitué par un certain nombre de palettes qui sont articulées entre elles et portent des galets 12 propres à circuler sur les chemins de roulement 13. Les palettes portent des nervures transversales 11. Les transporteurs de ce genre sont entraînés par barbotins.

Les barbotins 9, de même que les chemins de roulement 13 pour le transporteur supérieur sont montés dans un châssis 14 fait de longerons et de traverses assemblés, de manière que la position du transporteur supérieur puisse être réglée par rapport à celle du transporteur inférieur. Ce réglage peut être fait à l'aide de vérins à vis 15 d'une manière classique n'entrant à ce titre pas dans le cadre de l'invention.

En raison de la possibilité de réglage du transporteur supérieur, la distance entre les brins 8a et 10a des transporteurs, qui sont les brins au contact du matelas de fibres, peut être modifiée pour imposer la densité ou l'épaisseur voulues au produit en cours de fabrication.

À l'amont ou entrée de l'étuve se trouve un transporteur représenté schématiquement en 16, qui est en l'occurence un transporteur perforé d'usage courant pour la collecte de fibres en vue d'en former une nappe ou un matelas. Des caissons d'aspiration, comme illustré en 17, peuvent être utilisés pour favoriser la collecte des fibres et leur maintien en place sur le transporteur. Des ventilateurs d'aspiration 17a sont raccordés aux caissons d'aspiration. La nappe de fibres portée par le transporteur 16 est amenée aux cylindres de calandre R1—R2, qui sont de préférence réglables pour qu'il soit possible d'imposer l'épaisseur du matelas entrant dans l'étuve et, au sortir d'entre les cylindres R1—R2, le matelas partiellement calandré s'insère entre les brins des transporteurs dans l'étuve de traitement thermique.

A l'intérieur de l'étuve, les caissons de circulation d'air primaire ou à basse pression sont groupés par paires. Dans la forme de réalisation illustrée aux Fig. 1a et 1b, on aperçoit six paires de caissons à basse pression, les zones ou régions des paires étant indiquées de manière générale en A, B, C, D, E et F. Ces paires de caissons consistent chacune en deux coffres généralement rectangulaires 18 et 19, qui sont fermés de tous côtes, sauf celui tourné vers les brins 8a et 10a des transporteurs. Chaque caisson 18 est sur un cadre fixe au-dessous du brin supérieur 8a du transporteur inférieur et chaque caisson 19 est porté par le châssis réglable verticalement 14 du transporteur supérieur, de manière que les caissons supérieurs accompagnent le transporteur supérieur lorsque la position de celui-ci est ajustée.

Chaque caisson comporte également un carneau indiqué en 20 et communicant avec une gaine pour admettre ou évacuer le gaz de traitement. Les carneaux d'admission et d'évacuation sont marqués, respectivement, par les signes "+" et "—". Il convient de noter que, dans la première paire de caissons A, le carneau d'admission 20 est ménagé dans le caisson inférieur 18 du côté de l'amont du caisson par rapport au sens de défilement du produit dans l'étuve et que le carneau d'évacuation est ménagé dans le caisson supérieur 19 de cette paire, près de l'extrémité aval.

La même schéma général est répété aux caissons de la seconde paire B. Dans la troisième paire de caissons, C, le carneau d'admission est ménagé dans le caisson supérieur 19 à l'amont, et le carneau d'évacuation est ménagé dans le caisson inférieur à l'aval.

Dans la zone D occupée par la quatrième paire de caissons, l'agencement des carneux d'admission et d'évacuation est le même pour les paires A et B. Dans la paire de caissons E, l'agencement des carneaux d'admission et d'évacuation est tel qu'indiqué ci-dessus pour la paire C, et pour la paire F l'agencement est le même que pour les caissons D. Il est évident que ces relations peuvent être changées pour une modification de la conduite du traitement thermique et que des conditions d'écoulement différentes peuvent être choisies pour des produits qui diffèrent par la nature, l'épaisseur et/ou la densité, de la manière habituelle. De plus, le nombre des zones de traitement et caissons de circulation peut être plus grand ou plus petit suivant la nature du produit fabriqué. En outre, le passage du gaz dans certains caissons peut être interrompu, si la chose est désirée.

Avant d'envisager la structure et le fonctionnement du système de circulation d'air à haute pression faisant l'objet de l'invention, il convient de noter que l'enceinte générale de l'étuve 6 est munie d'un système d'evacuation de gaz comprenant les gaines 21 et le ventilateur d'aspiration 22, qui envoie le gaz quittant l'intérieur de l'étuve dans un appareil de précipitation convenable 23 qui sépare les solides en suspension pendant le passage du gaz. Les parois de l'étuve 6 constituent en fait une hotte entourant les organes intérieurs de l'étuve, notamment les caissons et collecteurs de circulation de gaz chauffé et le gaz qui se répand par les fuites est évacué de l'enceinte de l'étuve par le système d'évacuation décrit immédiatement ci-dessus.

La Fig. 2 est une vue à plus grande échelle en coupe transversale par les caissons à basse pression de la zone C. On peut voir que la gaine d'admission de gaz 24 est raccordée au caisson supérieur ou caisson d'admission 19 et que la gaine d'évacuation de gaz 25 est raccordée au caisson inférieur ou caisson d'évacuation 18. Des baffles 19a répartissent le gaz entrant sur la largeur du transporteur et donc sur la largeur du matelas en cours de traitement. Le gaz recueilli dans la gaine d'évacuation 25 est amené à un réchauffeur 26 auquel est associé un brûleur 27 et est aspiré à travers le réchauffeur par le ventilateur 28 et propulsé par celui-ci dans la gaine d'admission 24. Ce système de chauffage et de circulation de gaz peut être utilisé pour plus d'une paire de caissons à basse pression, mais, si le chose est desirée, des systèmes de circulation distincts peuvent être mis en service.

Pour accompagner le mouvement vertical du transporteur supérieur et des organes qui lui sont associés, la gaine d'admission 24 traverse un orifice surcalibré 29 dans la paroi de l'étuve et un soufflet souple 30 peut être utilisé pour rendre sensiblement étanche le joint entre la gaine d'admission et la paroi de l'étuve. De plus, la gaine 24 est munie d'un joint coulissant 24a permettant le réglage vertical.

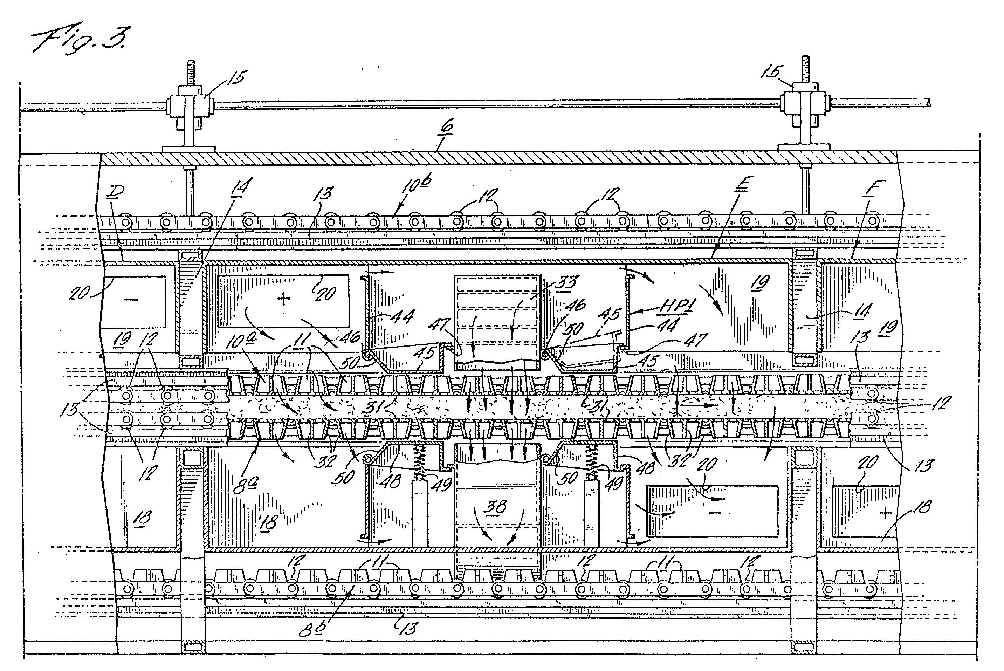

Il convient d'envisager d'abord certaines particularités de construction des tranporteurs pour l'examen du système de circulation de gaz à haute pression. Comme indiqué précédemment, ces transporteurs sont formés de palettes 11 articulées entre elles en une boucle sans fin de manière qu'une telle boucle constitue un transporteur. Les différentes palettes (voir par exemple Fig. 2 et 3) s'étendent sur toute la largeur du transporteur et sont munies de galets 12 comme indiqué ci-dessus, chaque palette comprenant une platine 31 qui est perforée par intervalles sur la largeur du transporteur (comme il est clairement visible à la Fig. 2) et munie de nervures 32 constituant des passages transversaux, qui traversent les palettes pour le passage du gaz des caissons d'admission à basse pression ou des collecteurs d'admission à haute pression à travers le matelas porté par les transporteurs, puis par les orifices et passages des palettes de l'autre transporteur jusque dans les caissons ou collecteurs d'évacuation.

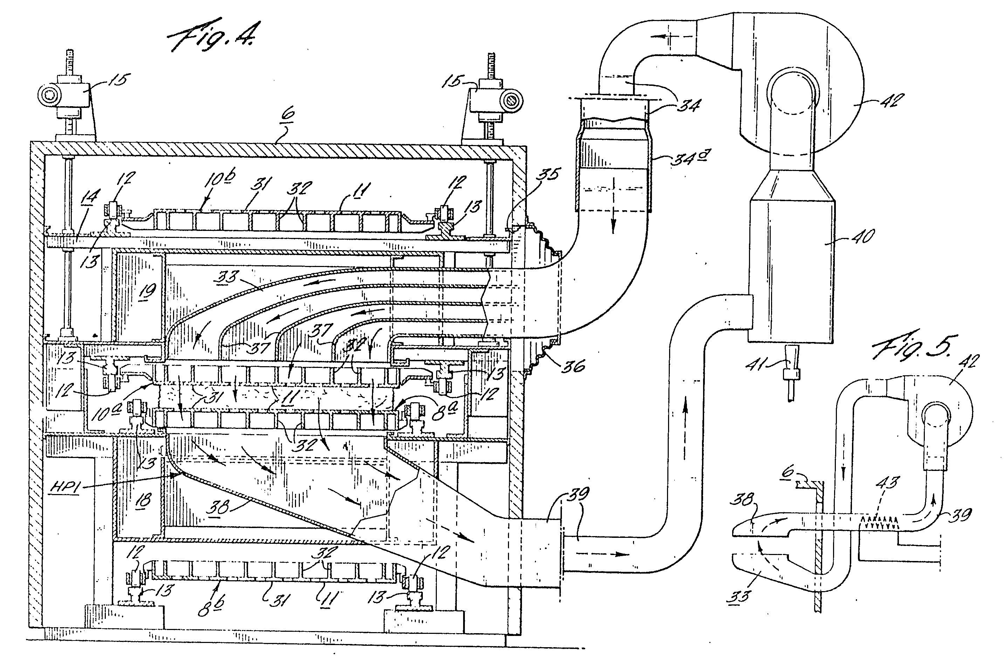

Comme indiqué dans la forme de réalisation des Fig. 1a et 1b, un système de collecteurs à haute pression HP1 est associé à la paire de caissons à basse pression E, ce système à haute pression et la paire de caissons à basse pression E étant représentés à plus grande échelle et en coupe longitudinale à la fig. 3 et à plus grande échelle et en coupe transversale à la Fig. 4. Il ressort de l'examen des Fig. 1b et 3 que le système de collecteurs à haute pression est sensiblement plus petit que les caissons à basse pression et de plus que le système de collecteurs à haute pression est logé dans les caissons à basse pression. Le collecteur d'admission à haute pression est indiqué en 33 et il ressort d'une comparaison des Fig. 3 et 4 que ce collecteur occupe la largeur du transporteur au-dessus du brin 10a, de même que la largeur du matelas, mais est relativement court dans le sens l'amont vers l'aval du trajet du matelas. Une gaine d'admission 34 communique avec le collecteur d'admission a haute pression et traverse un orifice surcalibré 35 dans la paroi de l'étuve, l'orifice étant rendu étanche par un soufflet flexible 36. La gaine 34 comprend un joint coulissant 34a permettant le mouvement vertical. A l'intérieur du collecteur d'admission à haute pression, des baffles 37 répartissent le gaz sous haute pression sur la largeur du transporteur. Un collecteur d'évacuation à haute pression 38 est agencé au-dessous du brin 8a du transporteur inférieur et communique avec la gaine 39 pour évacuer le gaz sous haute pression après que celui-ci a traversé le matelas en cours de traitement. La gaine 39 amène le gaz aspiré dans le réchauffeur 40 muni d'un brûleur 41 et d'où le gaz est aspiré par le ventilateur 42 qui le renvoie à la gaine d'admission 34.

Comme dans le système à basse pression, le système de chauffage et de circulation à haute pression comprenant le réchauffeur 40 et le ventilateur 42 peut être utilisé pour plus d'un système à haute pression ou, en variante, des réchauffeur et ventilateur distincts peuvent être mis en service pour différents systèmes à haute pression.

Bien que des baffles de répartition 37 soient agencés dans le collecteur d'admission 33, ils ne sont pas nécessaires et sont de préférence omis dans le collecteur d'évacuation 38.

La Fig. 5 illustre schématiquement une variante du réchauffeur qui peut être utilisée pour chauffer les gaz sous haute pression dans le système de circulation. En l'occurrence, un échangeur de chaleur représenté schématiquement en 43 est monté dans le collecteur d'évacuation 39 à l'amont du trajet des gaz dans le ventilateur ou soufflante 42. La Fig. 5 illustre également une variante d'agencement des collecteurs d'admission et d'évacuation à haute pression 33 et 38 dans le cas illustré le collecteur d'admission 33 est monté sous matelas traité et le collecteur d'évacuation 38 au-dessus du matelas.

En raison de l'utilisation d'un gaz sous pression relativement élevée dans le système à haute pression, il est important de réduire au minimum les fuites de gaz et il est nécessaire à cette fin de recourir à des dispositifs d'étanchéité spéciaux, par exemple ceux illustrés en particulier à la Fig. 3. On peut observer dans ce cas qu'un châssis 44 est prévu de chaque côté du collecteur supérier ou d'admission 33 et sert de monture pour deux cloisons 45 disposées de part et d'autre du collecteur 33. Chacune des cloisons est montée à pivot, comme indiqué en 46, de manière à pouvoir être relevée à l'écart de la face supérieure du brin 10a du transporteur. En un point opposé au pivot 46, la cloison 45 porte un rebord coopérant avec une butée 47 qui sert à limiter le mouvement vers le bas de la cloison et empêche ainsi celle-ci prendre contact avec la face supérieure du brin 10a du transporteur. Chacune des cloisons 45 est façonnée en forme de cuvette et s'étend sur toute la largeur du transporteur et il entre dans le cadre de l'invention que ces cloisons présentent une face inférieure plane et soient montées à proximité étroite de la face supérieure du brin 10a du transporteur, de manière à créer une étanchéité empêchant toute fuite latérale sensible du gaz sous haute pression utilisé dans le système distributeur à haute pression. Dans une installation typique et en position normale de service de chaque cloison 45, celle-ci se trouve à une distance de l'ordre de quelques millimètres, par exemple environ 3 à 5 mm, de la face supérieure du brin 10a.

Ces cloisons d'étanchéité mobiles sont conçues de manière à pouvoir être normalement beaucoup plus rapprochées du transporteur qu'il ne serait possible si elles étaient fixes. Les cloisons peuvent s'écarter aisément du transporteur dans le cas où des dépôts irréguliers de résine ou de fibres s'accumulent sur le transporteur, comme il arrive de temps à autre lors du fonctionnement d'une telle installation. Comme les cloisons 45 peuvent se déplacer automatiquement, une surépaisseur ou un dépôt n'endommage pas l'installation, même lorsque les cloisons sont montées très près de la face du transporteur en service normal.

Les cloisons 45, disposées au-dessus du transporteur, retombent automatiquement par gravité en place à proximité étroite du transporteur après avoir été écartées par un dépôt éventuel de résine ou de fibres. La largeur du fond plat de chacune des cloisons en cuvette 45 est de préférence au moins double de l'espacement entre deux nervures de renforcement des palettes du transporteur pour que l'étanchéité désirée soit assurée indépendamment de la position des nervures du transporteur par rapport à la cloison suivant le trajet du transporteur.

Des cloisons mobiles semblables 48 sont associées au brin 8a du transporteur inférieur et sont conçues pour s'écarter vers le bas de la face inférieure du brin 8a du transporteur en direction duquel elles sont ramenées par des ressorts 49. Des pivots et butées analogues sont prévus pour les cloisons inférieures 48, mais du fait qu'elles sont refoulées vers le bas par les obstacles rencontrés lorsque le brin du transporteur passe dans le système à haute pression, le retour des cloisons 48 à leur position normale de service est assuré par les ressorts plutôt que par gravité.

Chacune des cloisons 45, 45 et 48, 48 présente une surface inclinée indiquée en 50 à la partie amont pour faciliter le déplacement sour l'effet des corps étrangers amenés par les transporteurs.

On déduit de l'examen des Fig. 1b, 3 et 4 que dans le système de collecteurs à haute pression HP1, le collecteur d'admission 33 est logé au-dessus du transporteur et à l'intérieur du caisson de circulation à basse pression avec lequel communique la gaine d'admission de gaz sous basse pression, le collecteur d'évacuation du système à haute pression étant logé dans le caisson d'évacuation du système à basse pression.

On voit également à la Fig. 1b que dans la zone à basse pression F le système à haute pression HP2 présente l'agencement inverse de celui prévu pour la zone E. Par conséquent à la Fig. 1b, le collecteur d'admission à haute pression 33 est situé sous le matelas dans le caisson d'évacuation à basse pression.

Dans la variante illustrée à la Fig. 1c, deux systèmes de circulation à haute pression sont représentés à l'intérieur d'une seule paire de caissons à basse pression. Ainsi, les collecteurs d'admission à haute pression 33a et 33b sont diposés côte à côte avec une cloison d'étanchéité mobile intermédiaire telle que les cloisons d'étanchéité décrites ci-dessus à propos de la Fig. 3 et les collecteurs d'évacuation à haute pression coopérants 38a et 38b sont logés dans le caisson d'évacuation à basse pression au-dessous du matelas, une cloison mobile étant disposée entre les deux collecteurs d'évacuation à haute pression et du même type que décrit ci-dessus à propos de la Fig. 3. Des cloisons mobiles sont également associées au système de collecteurs de la Fig. 1c d'une manière à présente évidente.

Bien que les systèmes de circulation d'air à haute pression conformes à l'invention puissent être utilisés en association avec l'une quelconque des zones de traitement A à F, il est particulièrement avantageux d'utiliser de tels systèmes de circulation à haute pression en association avec les caissons de circulation à basse pression à l'aval d'un endroit situé à peu près au milieu du trajet et de préférence au moins au deux tiers de la longueur du trajet à partir de l'entrée dans l'étuve. Ainsi, suivant une forme de réalisation préférée illustrée aux Fig. 1a et 1b, deux systèmes de circulation à haute pression sont indiqués de manière générale en HP1 et HP2 et sont situés respectivement dans les zones à basse pression E et F, qui sont les deux dernières dans la forme de réalisation illustrée par les Fig. 1a et 1b.

Lorsque deux systèmes à haute pression sont logés dans une seule paire de caissons à basse pression, il est préférable d'agencer les collecteurs d'admission à haute pression du même côté du matelas et de préférence dans le caisson d'admission à basse pression, parce que les inconvénients dus aux fuites et donc les pertes de chaleur se réduisent ainsi au minimum.

Comme il est évident, les conditions de service varient en fonction d'un certain nombre de facteurs, notamment l'épaisseur et la densité du matelas en cours de fabrication, la composition et les propriétés du liant utilisé et la quantité de liant. Toutefois, on trouvera ci-après certaines indications générales relative aux conditions de travail.

En premier lieu, il entre dans le cadre de l'invention que la circulation à basse pression entretenue au moyen des caissons de circulation 18 et 19 dans les zones A à F inclusivement comprenne certaines zones dans lesquelles le gaz monte à travers le matelas et d'autres dans lesquelles il descend à travers le matelas. Il est conforme à l'invention aussi que le gaz circulant par les caissons 18 et 19 dans des zones différentes puisse se trouver à des températures différentes en fonction des propriétés du matelas et du liant, ainsi qu'il est déjà connu pour le fonctionnement des étuves de traitement thermique de matelas comprenant plusieurs zones de traitement. Un intervalle de température convenant pour le gaz admis dans les caissons de circulation 18 et 19 s'étend d'environ 150 jusqu'à environ 300°C pour des liants courants pour fibres, par exemple des liants à la résine phénol/formaldéhyde.

Les conditions de pression entretenues peuvent varier aussi et la pression peut être mesurée de différentes façons. La pression dans le caisson d'admission et celle dans le caisson d'évacuation diffèrent évidemment à cause de la perte de charge lors du passage du gaz à travers le matelas. Dans les conditions normales de fonctionnement, la pression dans le caisson d'admission des systèmes à basse pression est de l'ordre d'environ 5 à 30 mm d'eau.

Il entre dans le cadre de l'invention d'utiliser plus d'un système de circulation à haute pression, par exemple, dans le cas illustré à la Fig. 1b, où un système à haute pression HP1 est logé dans la zone à basse pression E et un autre système à haute pression HP2 est logé dans la zone à basse pression F et il est conforme à l'invention que l'un de ces systèmes à haute pression soit conçu pout faire passer le gaz de traitement à travers le matelas dans une direction et l'autre système à haute pression pour faire passer le gaz dans le matelas dans la direction opposée. Ainsi, comme indiqué par la flèche de la Fig. 1b, le système à haute pression HP1 est représenté comme débitant le gaz en sens descendant et le système à haute pression HP2, représenté comme débitant le gaz en sens ascendant. Cette mesure assure l'uniformité sensible du traitement dans toute l'épaisseur du matelas.

En ce qui concerne la pression et la température entretenues dans le système à haute pression, il convient de noter en outre qu'on peut bénéficier de certains avantages en utilisant tant le système à basse pression que le système à haute pression en combinaison dans une seule étuve, même si la température du système à haute pression n'est pas supérieure ou même est inférieure à la température du système à basse pression. La raison en est que le système à haute pression provoque une pénétration plus rapide et efficace de la chaleur dans le matelas que le système à basse pression.

Le système à haute pression peut fonctionner dans un grand intervalle de pression, mais en général sa pression doit être d'au moins quelques fois et de préférence d'au moins 10 à 20 fois la pression régnant dans le système à basse pression. Par exemple, la pression dans les collecteurs d'admission du système à haute pression peut être de plus d'environ 300 à 600 mm d'eau.

Dans un cas typique où la température de l'air dans les systèmes à basse pression est d'environ 150 à environ 300°C, la température dans les systèmes à haute pression est avantageusement d'environ 200 à environ 350°C.

Dans une installation typique, le volume total de gas utilisé dans les systèmes de circulation à basse pression peut être d'environ 30.000 Nm/$^3$ heure. Dans un tel cas typique, les systémes à haute pression consomment du gaz chauffé en quantité d'environ 5.000 Nm$^3$/heure. Le gaz sous haute pression est confiné dans des régions localisées relativement plus petites que celles occupées par le gaz sous basse pression et ces régions localisées, dans un cas typique, peuvent représenter à peu près 10% de l'étendue des zones de traitement établies par les caissons à basse pression.

Les températures et pressions varient aussi avec la vitesse de défilement du matelas en cours de fabrication et avec le nombre de zones de traitement dans l'étuve pour le traitement thermique du matelas. L'utilisation conforme à l'invention d'un système de circulation d'air à haute pression et d'un système de circulation d'air à basse pression est particulièrement efficace à divers égards, notamment du fait que le durcissement d'un liant déterminé peut être exécuté dans un plus petit nombre de zones de traitement et sur un trajet sensiblement plus court dans l'étuve. Cela tient au fait que les systèmes à haute pression sont particulièrement efficaces pour amener le coeur du matelas à la température de traitement thermique en peu de temps. Un autre avantage est que les systèmes à haute pression portent rapidement la température du liant à la valeur où la réaction exothermique a lieu, même au coeur du matelas, et cette température s'entretient alors plus commodément même au-delà de la région localisée occupée par les collecteurs à haute pression.

## Revendications

1. Appareil pour le traitement thermique d'un matelas de fibres portant un liant thermodurcissable pour les fibres, qui comprend un mécanisme transporteur pour faire défiler continuement le matelas de fibres dans un trajet de traitement, des caissons de circulation de gaz agencés de part et d'autre du matelas dans le trajet et délimitant une zone de traitement thermique, des gaines d'admission et d'évacuation de gaz communiquant respectivement avec les caissons de circulation et assurant le passage d'un gaz chauffé à travers le matelas de fibres dans la zone de traitement, caractérisé en ce qu'il comprend dans la partie aval de la zone de traitement une paire de collecteurs de circulation de gaz d'admission (33) et d'évacuation (38) situés dans les caissons de circulation (18, 19) et délimitant une région de traitement localisée à l'intérieur de la zone de traitement et plus petite que celle-ci et des dispositifs de circulation de gaz chauffé associés à ces collecteurs et faisant circuler du gaz chauffé à travers le matelas de fibres sous une pression supérieure à celle du gaz traversant le matelas de fibres d'un caisson de circulation à l'autre.

2. Appareil suivant la revendication 1 dont le mécanisme transporteur comprend deux transporteurs sans fin perforés présentant deux brins espacés et tournés vers le matelas de fibres pour saisir le matelas et le faire avancer dans le trajet de traitement, les caissons de circulation de gaz étant agencés sur les faces des brins du transporteur 8a, 10a, extérieures au trajet de traitement et comportant des ouvertures orientées vers les brins pour la circulation du gaz chauffé à travers les transporteurs perforés et à travers le matelas de fibres entre les brins des transporteurs, caractérisé en ce que les collecteurs de circulation (33, 38) sont définis pour partie par une cloison (45, 48) proche d'un brin (10a, 8a) d'un transporteur perforé et une monture (44) assurant la liberté de mouvement de la cloison (45, 48) pour qu'elle puisse s'écarter du brin (10a, 8a) du transporteur.

3. Appareil suivant la revendication 2, caractérisé en ce que la cloison (45), située au dessus du brin du transporteur (10a), peut s'écarter de celui-ci en s'élevant mais retombe vers le brin du transporteur sous l'influence de la gravité, tandis que des butées (47) limitent le mouvement descendant de la cloison en direction du brin (10a) du transporteur.

4. Appareil suivant le revendication 2, caractérisé en ce que la cloison (48), située au dessous du brin (8a) du transporteur, peut s'écarter de celui-ci en descendant, des organes sollicitant la cloison vers le haut en direction du brin (8a) du transporteur et des butées limitant le mouvement ascendant de la cloison vers le brin du transporteur.

5. Appareil suivant la revendication 1, caractérisé en ce qu'il comprend au moins deux paires de collecteurs de circulation (33, 38) de gaz définissant au moins deux régions de traitement localisées chacune dans la zone de traitement, mais plus petites que celle-ci, les paires de collecteurs étants agencées à une certaine distance l'une de l'autre dans le sens de l'amont à l'aval du trajet du matelas de fibres.

6. Appareil suivant la revendication 5, caractérisé en ce que les collecteurs d'admission (33) des paires sont situés dans le caisson de circulation (19) d'un côté du trajet de traitement et les collecteurs d'évacuation (38) sont situés dans le caisson de circulation (18) de l'autre côté du trajet de traitement.

7. Appareil suivant la revendication 5, caractérisé en ce que les collecteurs d'admission (33) des paires sont situés dans le caisson de circulation d'admission (19) d'un côté du trajet de traitement et les collecteurs d'évacuation des paires sont situés dans le caisson de circulation d'évacuation (18) de l'autre côté du trajet de traitement.

8. Appareil suivant la revendication 1, caractérisé en ce qu'il comprend plusieurs paires de caissons de circulation (18—19) agencées de part et d'autre du trajet de traitement et plusieurs paires de collecteurs de circulation (33, 38), au moins une paire de collecteurs (33, 38) étant située dans une paire de caissons de circulation (18, 19) et au moins une paire de collecteurs (33, 38) étant située dans une autre paire de caissons de circulation (18, 19).

9. Appareil suivant la revendication 2, caractérisé en ce que la cloison mobile (45, 48) a une dimension dans un sens parallèle au trajet au moins double de l'espacement entre deux nervures de renforcement 11 des palettes du transporteur.

**Claims**

1. Apparatus for heat treating a fibrous mat carrying a heat hardenable fiber binder comprising conveyor mechanism for advancing the fibrous mat through a treatment path, gas circulation boxes arranged at opposite sides of the mat in said path and defining a zone of thermal treatment, gas supply and exhaust ducts respectively connected with said circulation boxes and providing for passage of heated gas through the fibrous mat in said treatment zone, characterized in that it comprises in the downstream part of the treatment zone a pair of supply (33) and exhaust (38) gas circulation manifolds positioned within the circulation boxes (18, 19) and defining a localized treatment area within and smaller than said treatment zone, and heated gas circulating means associated with said manifolds and circulating heated gas through the fibrous mat at a pressure higher than that of the gas passed through the fibrous mat from one circulation box to another one.

2. Apparatus as defined in Claim 1 in which the conveyor mechanism comprises a pair of perforated endless conveyors having spaced conveyor flights presented toward the fibrous mat to engage and advance the mat through the treatment path, the gas circulation boxes being disposed at the outboard sides of said conveyor flights 8a, 10a and having openings presented toward said flights for circulation of heated gas through perforated conveyors and through the fibrous mat between said flights, characterised in that said circulation manifolds (33, 38) are defined in part by a wall element (45, 48) lying close to a flight (10a, 8a) of a perforated conveyor, and mounting means (44) providing freedom for displacement of the wall element (45, 48) away from the conveyor flight (10a, 8a).

3. Apparatus as defined in Claim 2 characterized in that the wall element (45), positioned above the conveyor flight 10a, is displaceable upwardly away from the conveyor flight and is downwardly moveable toward the conveyor flight under the influence of gravity, while stop means (47) limit the downward movement of the wall element toward the conveyor flight (10a).

4. Apparatus as defined in Claim 2 characterized in that the wall element (48) positioned below the conveyor flight (8a) is displaceable downwardly away from the conveyor flight (8a) and stop means limiting upward movement of the wall element toward the conveyor flight.

5. Apparatus as defined in Claim 1 characterized in that it comprises at least two pairs of gas circulation manifolds (33, 38) defining at least two localized treatment areas each within but smaller than said treatment zone, the pairs of manifolds being spaced from each other in the upstream and downstream directions of the feed path of the fibrous mat.

6. Apparatus as defined in Claim 5 characterized in that the supply manifolds (33) of said pairs are located in the circulation box (19) at one side of the feed path and the outlet manifolds (38) are located in the circulation box (18) at the other side of the feed path.

7. Apparatus as defined in Claim 5 characterized in that the supply manifolds (33) of said pairs are located in the supply circulation box (19) at one side of the feed path and the exhaust manifolds of said pairs are located in the exhaust circulation box (18) at the other side of the feed path.

8. Apparatus as defined in Claim 1 characterized in that it comprises a plurality of pairs of circulation boxes (18, 19) arranged at opposite sides of the feed path, and a plurality of pairs of circulation manifolds (33, 38), at least one pair of manifolds (33, 38) being positioned in one pair of circulation boxes (18, 19) and at least one pair of manifolds (33, 38) being positioned in another pair of circulation boxes (18, 19).

9. Apparatus as defined in Claim 2 characterized in that the displaceable wall element (45, 48) has a dimension in a direction parallelling the feed path at least twice as great as the spacing between two projecting ribs 11 of the links of the conveyor.

## Patentansprüche

1. Vorrichtung zur Wärmebehandlung einer ein in der Wärme aushärtbares Faserbindemittel enthaltenden Fasermatte mit einer Fördervorrichtung zum Vorrücken der Fasermette längs einer Behandlungsbahn, mit Gasumwälzkästen an voneinander abgewendeten Seiten der Matte auf dieser Bahn zur Begrenzung einer Behandlungszone, mit mit den Gasumwälzkästen verbundenen Gaszuführungs- und Abzugsleitungen zur Bildung einer Bahn für das erhitzte Gas durch die Fasermatte in der Behandlungszone, gekennzeichnet durch ein Paar von Zuführungs- (33) und Abzugsgasumwälzleitungen (38) innerhalb der Umwälskästen (19 bzw. 18) zur Bildung einer stromabwärtigen örtlichen Behandlungszone innerhalb der und kleiner als die Behandlungszone und durch den Leitungen (33, 38) zugeordnete Heißgasumwälzeinrichtungen, die erhitztes Gas durch die Fasermatte mit einem Druck führen, der höher ist als der Druck des Gases, das zwischen den Umwälzkästen (18, 19) durch die Fasermatte geführt wird.

2. Vorrichtung nach Anspruch 1, bei der die Fördervorrichtung aus zwei gelochten Endlosförderern mit im Abstand angeordneten Förderertrümer besteht, die auf die Fasermatte gerichtet sind, die Matte auf ihrem Weg durch die Behandlungszone erfassen und vorrücken, die Gasumwälzkästen an den Außenseiten der Förderertrümer 8a, 10a angeordnet sind und in Richtung auf die Förderertrümer gerichtete Öffnungen aufweisen, durch die das erhitzte Gas durch den gelochten Förderer und durch die Fasermatte zwischen den Förderertrümern umgewälzt wird, dadurch gekennzeichnet, daß die Umwälzverteilerleitungen (33, 38) wenigstens teilweise durch Wandelemente (45, 48) begrenzt sind, die eng auf einem Trum (10a, 8a) des gelochten Föderers aufliegen, und auf Befestigungseinrichtungen (44) gehalten sind, die diesen Wandelementen (45, 48) Bewegungsfreiheit weg vom Förderertrum (10a, 8a) geben.

3. Vorrichtung nach Anspruch 2, dadurch gekennzeichnet, daß Wandelement (45) oberhalb des Förderertrums (10a) liegt und nach oben vom Förderertrum (10a) weg verschiebbar und in Richtung auf das Förderertrum (10a) unter dem Einfluß der Schwere beweglich ist, sowie ferner gekennzeichnet durch Begrenzungsanschläge (47) zur Begrenzung einer abwärtsbewegung des Wandelementes in Richtung auf das Förderertrum (10a).

4. Vorrichtung nach Anspruch 2, dadurch gekennzeichnet, daß das Wandelement (48) unter dem Förderertrum (8a) sitzt und nach unten vom Förderertrum (8a) weg verschiebbar ist, wobei Einrichtungen das Wandelement nach oben in Richtung des Förderertrums (8a) drücken und Begrenzungsanschläge zur Begrenzung der Aufwärtsbewegung des Wandelementes in Richtung auf das Förderertrum vorgesehen sind.

5. Vorrichtung nach Anspruch 1, dadurch gekennzeichnet, daß wenigstens zwei Paare von Gasumwälzverteilerleitungen (33, 38) vorgesehen sind, die wenigstens zwei begrenzte Behandlungsbereiche jeweils innerhalb und kleiner als die Behandlungszone begrenzen, wobei die Paare von Leitungen im Abstand voneinander stromaufwärts und stromabwärts der Vorschubbahn der Fasermatte angeordnet sind.

6. Vorrichtung nach Anspruch 5, dadurch gekennzeichnet, daß die Zuführungsverteilerleitungen (33) der Paare in dem Umwälzkasten (19) auf einer Seite der Vorschubbahn und die Auslaßverteilerleitungen (38) in dem Umwälzkasten (18) auf der anderen Seite der Vorschubbahn angeordnet sind.

7. Vorrichtung nach Anspruch 5, dadurch gekennzeichnet, daß die Zufuhrungsverteilerleitungen (33) der Paare in dem Zuführungsumwälzkasten (19) auf einer Seite der Vorschubbahn und die Austrittsverteilerleitungen der Paare im Austrittsumwälzkasten (18) auf der anderen Seite der Vorschubbahn angeordnet sind.

8. Vorrichtung nach Anspruch 1, dadurch gekennzeichnet, daß eine Vielzahl von Paaren von Umwälzkästen (18, 19) auf entgegengesetzten Seiten der Vorschubbahn angeordnet ist und eine Vielzahl von Paaren von Umwälsverteilerleitungen (33, 38) vorgesehen ist, wobei wenigstens ein Paar der Umwälzverteilerleitungen (33, 38) in einem Paar der Umwälzkästen (18, 19) und wenigstens ein Paar der Verteilerleitungen (33, 38) in einem anderen Paar der Umwälzkästen (18, 19) angeordnet ist.

9. Vorrichtung nach Anspruch 2, dadurch gekennzeichnet, daß das verschiebbare Wandelement (45, 48) eine Abmessung in Richtung parallel zur Vorschubbahn aufweist, die wenigstens zweimal grösser ist als die Abmessung zwischen zwei Lenkerrippen (11) des Förderers.

Fig. 1ª

Fig. 1ᵇ

Fig. 1ᶜ

Fig. 2

Fig. 3.

0 000 111

*Fig.4.*

*Fig.5.*

0000 111